# EUROPÄISCHE PATENTSCHRIFT

(11) **EP 3 688 852 B1**
(45) Veröffentlichungstag und Bekanntmachung des Hinweises auf die Patenterteilung: **28.12.2022**
(21) Anmeldenummer: 18774044.4
(22) Anmeldetag: 25.09.2018
(51) Int. Cl.: H02H 3/02

(54) **SCHUTZSCHALTER UND VERFAHREN ZUM BETREIBEN DESSEN**
CIRCUIT BREAKER AND METHOD FOR OPERATING SAME
DISJONCTEUR ET PROCÉDÉ DE FONCTIONNEMENT CORRESPONDANT

(30) Priorität: 26.09.2017 DE 102017122220
(43) Veröffentlichungstag der Anmeldung: 05.08.2020
(73) Patentinhaber: Eaton Intelligent Power Limited, Dublin 4 (IE)
(72) Erfinder: KOCH, Michael, 2100 Korneuburg (AT)
(86) Internationale Anmeldenummer: PCT/EP2018/075856
(87) Internationale Veröffentlichungsnummer: WO 2019/063502

(56) Entgegenhaltungen:
- EP-A1- 2 523 304
- WO-A1-2017/116296
- DE-A1- 4 235 138
- US-A- 5 003 486
- US-A1- 2014 104 734
- US-A1- 2015 002 977
- US-B2- 8 817 427

## Beschreibung

Die Erfindung betrifft ein Verfahren zum Betreiben eines Schutzschalters gemäß dem Patentanspruch 1.

Es sind Schutzschalter bekannt, welche bei der Detektion eines Fehlerstromes den Stromkreis unterbrechen. Derartige Fehlerstrome können dadurch verursacht werden, dass ein Teil des Stromes durch eine Berührung einer Person mit dem Stromkreis nicht durch den Neutralleiter abfließt, sondern durch die Person gegen Erde. Hierbei ist es bekannt, dass ein Zusammenhang zwischen der Höhe des Fehlerstromes, der Dauer des Fehlerstromes und der Wahrscheinlichkeit des Auftretens von Kammerflimmern bei der betroffenen Person besteht.

Herkömmliche Schutzschalter sind daher derart ausgebildet, dass bei einem Auftreten eines Fehlerstromes über einem vorgegebenen Grenzwert der Schutzschalter innerhalb einer vorgegebenen Zeitdauer den Stromkreis unterbricht. Das Unterbrechen des Stromkreises erfolgt hierbei im Wesentlichen sprungartig, beispielsweise durch das Öffnen von Schaltkontakten, um die Dauer, in welcher die Person dem Fehlerstrom ausgesetzt ist, gering zu halten.

Bekannte Fehlerstromschutzschalter unterbrechen daher einen Stromkries möglichst schnell, wobei das Trennen bzw. Unterbrechen des Stromkreises sprungartig erfolgt.

Nachteilig daran ist, dass selbst bei einer Unterbrechung des Stromkreises bei einem Fehlerstrom innerhalb der vorgesehenen Zeitdauer weiterhin Kammerflimmern bei der betroffenen Person auftreten kann.

Aus der US 2014/104734 A1, der US 2015/002977 A1, der DE 42 35 138 A1, der US 8 817 427 B2 und der WO 2017/116296 A1 sind jeweils Schutzschaltgeräte bekannt, welche für die Detektion von Überströmen bzw. Kurzschlüssen ausgebildet sind. Keines dieser Dokumente betrifft den Schutz vor Erd- bzw. Körperfehlerströmen. Keines dieser Dokumente zeigt einen sog. Fehlerstromschutzschalter.

Weiters sind die US 5,003,486 A und die EP 2 523 304 A1 bekannt. Keines dieser Dokumente zeigt ein langsames kontrolliertes Abschalten, anstelle eines sprunghaften Abschaltvorganges.

Aufgabe der Erfindung ist es daher ein Verfahren der eingangs genannten Art anzugeben, mit welchem die genannten Nachteile vermieden werden können, mit welchem das Auftreten von Kammerflimmern bei betroffenen Personen verringert werden kann.

Erfindungsgemäß wird dies durch die Merkmale des Patentanspruches 1 erreicht.

Dadurch ergibt sich der Vorteil, dass das Auftreten von Kammerflimmern bei den betroffenen Personen bei Stromunfällen verringert werden kann, wodurch die Sicherheit der Benutzer elektrischer Geräte wesentlich erhöht werden kann.

Versuche haben gezeigt, dass bei herkömmlichen Schutzschaltern Kammerflimmern auftreten kann, wenn ein an sich vorschriftsmäßiger sprungartiger Abschaltvorgang während der vulnerablen Phase des Herzens erfolgt. Dabei hat sich gezeigt, dass durch ein möglichst schnelles Abschalten eines Fehlerstromes nicht zwingend der beteiligte Mensch gerettet wird. In ungünstigen Fällen, nämlich wenn der - über den betreffenden Menschen fließende - Fehlerstrom während der vulnerablen Phase des Herzens dieses Menschen abgeschaltet wird, ist der Abschaltvorgang selbst wesentlich gefährlicher für den Menschen als der betreffende Fehlerstrom. Im ungünstigsten Fall kann ein herkömmlicher Fehlerstromschutzschalter durch dessen normgerechtes Auslösen und Abschalten das Herzkammerflimmern verursacht, an welchem letztendlich der betroffene Mensch stirbt. Dabei kann sich der Schutzschalter, der - wie der Name bereits sagt - den Menschen schützen soll, selbst als die eigentliche Gefahr entpuppen.

Durch die Verwendung einer vorgegebenen Abschaltkurve anstelle eines abrupten Abschaltens und durch einen vorgegebenen Zeitverlauf des Spannungswertes beim Abschaltvorgang, statt einem sprungartigen Abschaltvorgang mit einem großen Spannungsabfall, kann die Wahrscheinlichkeit des Auftretens von Kammerflimmern verringert werden kann, da kein großer Spannungsabfall während der vulnerablen Phase des Herzens erfolgt. Dadurch kann weiterhin der Stromkreis schnell unterbrochen werden, wobei es jedoch auch beim Abschalten während der vulnerablen Phase des Herzens zu keiner Gefahr für den betroffenen Menschen kommt.

Die Erfindung betrifft weiters einen Schutzschalter gemäß dem Oberbegriff des Patentanspruches 8.

Aufgabe der Erfindung ist es daher weiters, einen Schutzschalter der eingangs genannten Art anzugeben, mit welchem die genannten Nachteile vermieden werden können, und mit welchem das Auftreten von Kammerflimmern bei betroffenen Personen verringert werden kann.

Erfindungsgemäß wird dies durch die Merkmale des Patentanspruches 8 erreicht.

Die Vorteile des Schutzschalters entsprechen den vorstehenden Vorteilen des Verfahrens.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 zeigt den Spannungsverlauf bei einem Abschaltvorgang eines herkömmlichen Schutzschalters;
Fig. 2 zeigt den Druckverlauf einer linken Herzkammer im Rahmen eines Versuches;
Fig. 3 zeigt das Diagramm einer ersten bevorzugten Ausführungsform einer Abschaltkurve;
Fig. 4 zeigt das Diagramm einer zweiten bevorzugten Ausführungsform einer Abschaltkurve;
Fig. 5 zeigt das Diagramm einer dritten bevorzugten Ausführungsform einer Abschaltkurve;
Fig. 6 zeigt das Diagramm einer vierten bevorzugten Ausführungsform einer Abschaltkurve;
Fig. 7 zeigt das Diagramm einer fünften bevorzugten Ausführungsform einer Abschaltkurve;
Fig. 8 zeigt eine bevorzugte Ausführungsform eines Schutzschalters als schematische Darstellung.

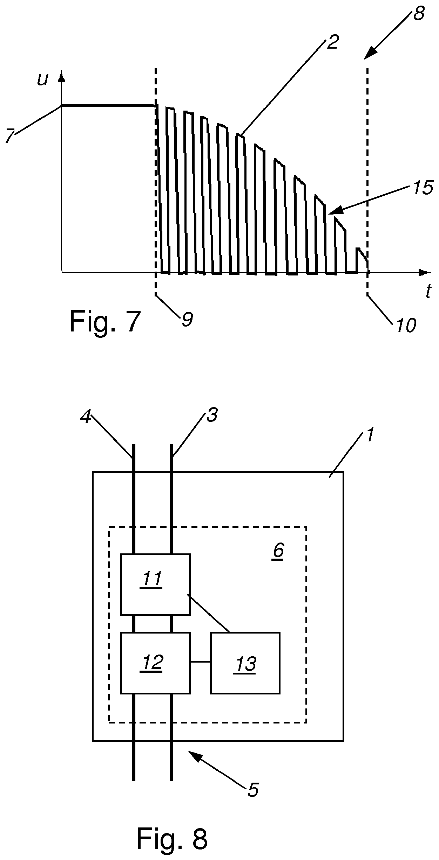

Die Fig. 8 zeigt eine bevorzugte Ausführungsform eines Schutzschalters 1 umfassend einen Neutralleiter 3, wenigstens einen stromführenden Leiter 4 und eine Abschalteinheit 6, wobei die Abschalteinheit 6 ausgebildet ist bei einer Detektion eines Fehlerstromes durch einen Fehlerstromdetektor 11 einen Abschaltvorgang durchzuführen.

Der Schutzschalter 1 ist eine dem Berührungsspannungsschutz dienende Schalteinrichtung, die einen elektrischen Stromkreis unterbricht, sobald ein durch Körperschluss oder anderweitigen Erdschluss hervorgerufener Fehlerstrom in vorgegebener Höhe detektiert wird.

Um den elektrischen Stromkreis zu unterbrechen, weist ein Schutzschalter 1 eine Abschalteinheit 6 auf, welche im Falle der Detektion eines Fehlerstromes vorgegebener Höhe den durch den Neutralleiter 3 und dem wenigstens einen stromführenden Leiter 4, insbesondere sämtliche stromführende Leiter 4, gebildeten elektrischen Stromkreis unterbricht.

Der Vorgang, in dem der Schutzschalter 1 den elektrischen Stromkreis unterbricht, wird als Abschaltvorgang bezeichnet, kann aber auch als Auslösen des Schutzschalters 1 bezeichnet werden.

Die Abschalteinheit 6 kann besonders bevorzugt einen Fehlerstromdetektor 11 aufweisen, um den Fehlerstrom zu detektieren. In diesem Fall ist der Schutzschalter 1 als Fehlerstromschutzschalter ausgebildet. Der Fehlerstromdetektor 11 überwacht dabei den Neutralleiter 3 und dem wenigstens einen stromführenden Leiter 4, insbesondere sämtliche stromführende Leiter 4, welche ein elektrisch nachfolgendes Teilnetz mit einem vorgeschalteten Energieversorgungsnetz verbinden. Der Fehlerstromdetektor 11 kann insbesondere als Summenstromwandler ausgebildet sein, beispielsweise bei Wechselstrom. Alternativ kann der Fehlerstromdetektor 11 als Förstersonde oder als Shuntwiderstand ausgebildet sein, beispielsweise bei Gleichstrom.

Alternativ kann die Abschalteinheit 6 einen Eingang für ein Fehlerstromsignal aufweisen. In diesem Fall kann ein Fehlerstromdetektor 11 abseits vom Schutzschalter 1 angeordnet sein, und bei der Detektion eines Fehlerstromes ein Fehlerstromsignal ausgeben. Das Fehlerstromsignal wird leitungsgebunden oder über Funk an die Abschalteinheit 6 des Schutzschalters 1 übermittelt, wodurch der Schutzschalter 1 bei der Detektion eines Fehlerstromes ferngesteuert abgeschaltet werden kann.

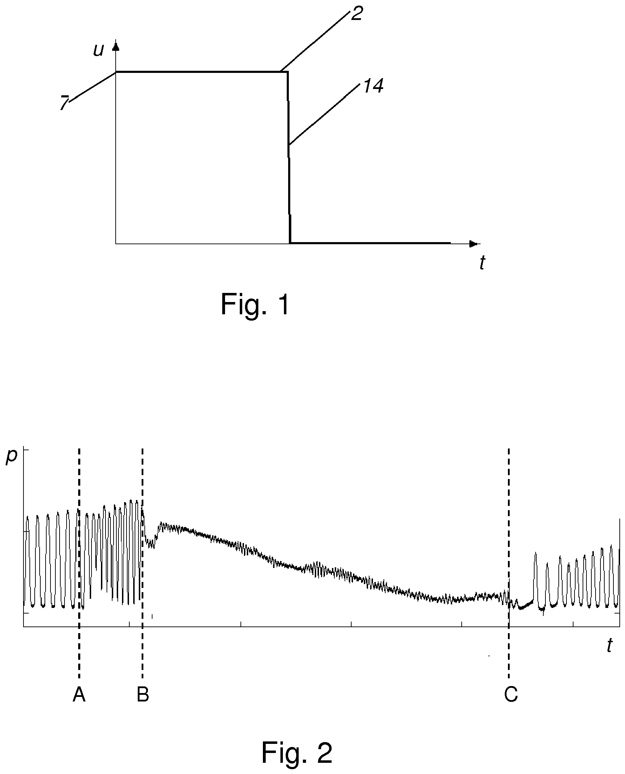

Gemäß dem Stand der Technik erfolgt die Trennung des elektrischen Stromkreises beim Abschaltvorgang sprungartig, sei es durch das Öffnen von Schaltkontakten oder das sofortige Schalten eines Halbleiterschalters 12 auf Sperrwiderstand. In Fig. 1 ist beispielhaft dargestellt, wie ein Abschaltvorgang bezüglich des Spannungswertes 2 zwischen dem Neutralleiter 3 und wenigstens einem stromführenden Leiter 4 an einem Ausgang 5 eines Schutzschalters 1 gemäß dem Stand der Technik verläuft. Durch das Öffnen der Schaltkontakte oder das sofortige Schalten eines Halbleiterschalters 12 auf Sperrwiderstand fällt der Spannungswert 2 an einer einzigen Sprungstelle 14 im zeitlichen Verlauf sprungartig von dem Betriebsspannungswert 7 auf im Wesentlichen Null. Da bei ausreichend hoher zeitlicher Auflösung physikalisch betrachtet selbst ein Öffnen von Schaltkontakten oder das sofortige Schalten eines Halbleiterschalters 12 nicht augenblicklich erfolgt, werden Vorgänge, welche weniger als 1 ms dauern, in weiterer Folge als sprungartig angesehen.

In Fig. 2 ist ein Diagramm eines Versuches an einem isolierten Kaninchenherz dargestellt, wobei im Diagramm der Druckverlauf der linken Herzkammer über die Zeit dargestellt wird. Bis zur Position A ist der Herzrhythmus normal. An Position A wird eine externe elektrische Gleichspannung an das Herz angelegt. Man erkennt eine Tachykardie mit erhöhter Herzfrequenz, die Pumpleistung des Herzens ist aber weiterhin gegeben. In Position B wird die Gleichspannung mit einem Verhalten wie in Fig. 1 abgeschaltet, wobei der Abschaltvorgang in der vulnerablen Phase des Herzens erfolgt. Die vulnerable Phase des Herzens ist ein kurzer zeitlicher Abschnitt im Herzzyklus, bei welchem sich Zellen des Herzens in einem unbestimmten elektrischen Zustand befinden. Durch den Abschaltvorgang innerhalb der vulnerablen Phase des Herzens, und den damit verbundenen starken Spannungsabfall, wird ein Kammerflimmern des Herzens ausgelöst. In Position C wird durch einen elektrischen Defibrillationsimpuls der normale Herzrhythmus wieder hergestellt.

Es ist daher vorgesehen, dass die Abschalteinheit 6 ausgebildet ist bei einem Abschaltvorgang einen Spannungswert 2 zwischen dem Neutralleiter 3 und dem wenigstens einen stromführenden Leiter 4 an einem Ausgang 5 des Schutzschalters 1 gemäß einer vorgegebenen Abschaltkurve 8 von einem Betriebsspannungswert 7 auf im Wesentlichen Null zu reduzieren, wobei der Spannungswert 2 gemäß der Abschaltkurve 8 ab einem Anfangszeitpunkt 9 reduziert wird und erst nach einer vorgegebenen ersten Zeitdauer im Wesentlichen Null erreicht. Der Spannungswert 2 entspricht der effektiven Spannung und daher bei Wechselstrom nicht zwingend der zeitlich variablen Spannung. Der Ausgang 5 des Schutzschalters 1 sind hierbei jene elektrischen Kontakte des Schutzschalters 1, welche dem elektrisch nachfolgenden Teilnetz zugewandt sind. Der Betriebsspannungswert 7 ist jener Spannungswert 2, welcher in einem eingeschalteten Zustand des Schutzschalters 1 zwischen dem Neutralleiter 3 und dem wenigstens einen stromführenden Leiter 4 an dem Ausgang 5 des Schutzschalters anliegt. Der Abschaltvorgang entspricht der Abschaltung des Schutzschalters 1, wobei der Spannungswert 2 auf im Wesentlichen Null reduziert wird, um das Teilnetz vom Energieversorgungsnetz zu trennen. Im Wesentlichen Null ist hierbei ein für das Teilnetz irrelevanter Spannungswert 2 der auftreten kann, wenn die Trennung durch einen Halbleiterschalter 12 erfolgt, welcher zwar einen sehr hohen aber nicht unendlich hohen Sperrwiderstand aufweist.

Die Abschalteinheit 6 ist derart ausgebildet, dass bei einem Abschaltvorgang der Stromkreis nicht sprungartig unterbrochen wird, sondern der Spannungswert 2 im Abschaltvorgang über eine erste Zeitdauer und gemäß der vorgegebenen Abschaltkurve 8 auf im Wesentlichen Null reduziert wird. Es erfolgt daher gemäß der Abschaltkurve 8 eine Reduktion des Spannungswertes 2 ab einem Anfangszeitpunkt 9, wobei der Spannungswert 2 an einem, vom Anfangszeitpunkt 9 um die vorgegebene erste Zeitdauer beabstandeten, Endzeitpunkt 10 im Wesentlichen Null erreicht. Es wird daher die Gefahr eines Kammerflimmerns nicht nur durch ein möglichst schnelles Abschalten verringert, sondern durch die kontrollierte Form, wie der Spannungswert 2 im Abschaltvorgang gegen im Wesentlichen Null geführt wird. Der Spannungswert 2 von im Wesentlichen Null entspricht hierbei einem ausgeschalteten Zustand des Schutzschalters 1. Die Abschaltkurve 8 ist hierbei derart ausgebildet, dass ab einem Anfangszeitpunkt 9 an der Spannungswert 2 reduziert wird, und der Spannungswert 2 aber erst nach der vorgebbaren ersten Zeitdauer im Wesentlichen Null erreicht. Der Abfall des Spannungswertes 2 von der Betriebsspannung 7 auf im Wesentlichen Null erfolgt daher nicht sprungartig, sondern über die vorgegebene erste Zeitdauer.

Dadurch ergibt sich der Vorteil, dass das Auftreten von Kammerflimmern bei den betroffenen Personen bei Stromunfällen verringert werden kann, wodurch die Sicherheit der Benutzer elektrischer Geräte wesentlich erhöht werden kann. Hierbei haben Versuche gezeigt, dass bei herkömmlichen Schutzschaltern 1 Kammerflimmern auftreten kann, wenn ein an sich vorschriftsmäßiger sprungartiger Abschaltvorgang während der vulnerablen Phase des Herzens erfolgt. Durch die Verwendung einer vorgegebenen Abschaltkurve und dadurch einen vorgegebenen Zeitverlauf des Spannungswertes 2 beim Abschaltvorgang, statt einem sprungartigen Abschaltvorgang mit einem großen Spannungsabfall, kann die Wahrscheinlichkeit des Auftretens von Kammerflimmern verringert werden kann, da kein großer Spannungsabfall während der vulnerablen Phase des Herzens erfolgt.

Weiters ist ein Verfahren zum Betreiben des Schutzschalters 1 vorgesehen, wobei bei einer Detektion eines Fehlerstromes der Abschaltvorgang eingeleitet wird, wobei beim Abschaltvorgang der Spannungswert 2 zwischen dem Neutralleiter 3 und dem wenigstens einen stromführenden Leiter 4 an dem Ausgang 5 des Schutzschalters 1 durch die Abschalteinheit 6 von dem Betriebsspannungswert 7 gemäß der vorgegebenen Abschaltkurve 8 auf im Wesentlichen Null reduziert wird, wobei der Spannungswert 2 gemäß der Abschaltkurve 8 ab einem Anfangszeitpunkt 9 reduziert wird und erst nach einer vorgegebenen ersten Zeitdauer im Wesentlichen Null erreicht.

Besonders bevorzugt kann vorgesehen sein, dass zwischen der dem Neutralleiter 3 und dem wenigstens einen stromführenden Leiter 4 ein Gleichstrom anliegt. Der Schutzschalter 1 kann daher besonders bevorzugt für Gleichstrom ausgelegt sein. Bei Gleichstrom kann der Spannungswert 2 insbesondere der tatsächlich anliegenden Spannung entsprechen. Das gegenständliche Verfahren bzw. der gegenständliche Schutzschalter 1 ist bei einem Gleichstrom besonders vorteilhaft, da bei einem Gleichstrom im Vergleich zu einem Wechselstrom an sich höhere Stromstärken als Fehlerstrom möglich sind, ohne dass es während des Stromflusses im Körper der betroffenen Person zu einem Kammerflimmern kommt. Dafür ist der tatsächliche Spannungsabfall bei einem Abschaltvorgang des Schutzschalters 1 üblicherweise größer als bei einem Wechselstrom. Bei einem Gleichstrom wird daher bei einem herkömmlichen Schutzschalter 1 das Kammerflimmern viel häufiger erst beim Abschaltvorgang verursacht, wodurch das gegenständliche Verfahren bzw. der gegenständliche Schutzschalter 1 die Gefahr eines Kammerflimmerns bei einem Gleichstrom wesentlich stärker reduzieren kann.

Weiters nimmt der Anteil an Gleichstromnetzen durch die steigende Verbreitung der Elektromobilität zu. Das Verfahren bzw. der Schutzschalter 1 kann daher besonders bevorzugt bei einem Ladevorgang oder Betrieb eines Elektrofahrzeuges verwendet werden. Dadurch kann die Gefahr eines tödlichen Stromschlages beim Laden oder Betrieb eines Elektrofahrzeuges, beispielsweise durch Berührung des Rahmens eines beschädigten Fahrzeuges, verringert werden.

Alternativ kann vorgesehen sein, dass zwischen dem Neutralleiter 3 und dem wenigstens einen stromführenden Leiter 4 ein Wechselstrom anliegt. Der Schutzschalter 1 kann hierbei für Wechselstrom ausgelegt sein. Beim Wechselstrom entspricht der Spannungswert 2 der effektiven Spannung und nicht der zeitlich variablen Spannung.

Besonders bevorzugt kann vorgesehen sein, dass die Abschalteinheit 6 wenigstens einen Halbleiterschalter 12 und eine mit dem wenigstens einen Halbleiterschalter 12 wirkverbundene Steuereinheit 13 aufweist, dass die Abschaltkurve 8 in der Steuereinheit 13 abgespeichert ist, und dass die Steuereinheit 13 ausgebildet ist einen Widerstand des wenigstens einen Halbleiterschalters 12 gemäß der Abschaltkurve 8 zu steuern. Ein Halbleiterschalter 12 ist ein elektronischer Bauteil, welcher aufgrund des hohen möglichen Sperrwiderstandes die Aufgaben eines mechanischen Schalters übernehmen kann. Durch die Höhe einer angelegten Steuerspannung der Steuereinheit 13 an den Halbleiterschalter 12 kann der Widerstand des Halbleiterschalters 12 zwischen einem Durchlasswiderstand und einem Sperrwiderstand üblicherweise stufenlos geregelt werden. Da der Sperrwiderstand üblicherweise sehr hoch ist, insbesondere größer als 1 MΩ, aber nicht unendlich, kann der Spannungswert 2 nicht auf exakt Null, aber einen vernachlässigbaren Wert reduziert werden, welcher als im Wesentlichen Null angesehen wird. Dadurch kann die Abschaltkurve 8 einfach als abrufbares Spannungssignal mit einem vorgegebenen Zeitverlauf in der Steuereinheit 13 abgespeichert werden, welches bei einem Abschaltvorgang an dem Halbleiterschalter 12 angelegt wird. Dadurch ist die Durchführung eines Abschaltvorganges mit einer definierten und gut vorgebbaren Abschaltkurve 8 einfach zu bewerkstelligen.

Der Halbleiterschalter 12 kann insbesondere ein Halbleiterleistungsschalter sein.

Der Halbleiterschalter 12 kann insbesondere einen Feldeffekttransistor aufweisen.

Weiters kann vorgesehen sein, dass die Abschalteinheit 6 zusätzlich zu dem Halbleiterschalter 12 mechanische Schaltkontakte aufweist. Hierbei erfolgt der Abschaltvorgang gemäß der Abschaltkurve 8 durch den Halbleiterschalter 12, wobei die mechanischen Schaltkontakte nach Abschluss des Abschaltvorganges zusätzlich für eine galvanische Trennung des Stromkreises sorgen.

Insbesondere kann jeweils ein Halbleiterschalter 12 für den Neutralleiter 3 sowie für die einzelnen stromführenden Leiter 4 vorgesehen sein. In Fig. 8 sind die unterschiedlichen Halbleiterschalter 12 lediglich als ein Block dargestellt.

Alternativ kann vorgesehen sein, dass die Abschalteinheit 6 einen Verlauf des Spannungswertes 2 gemäß der Abschaltkurve 8 durch eine Kombination eines mechanischen Schalters mit zusätzlichen elektrischen Bauteilen, insbesondere einem Kondensator, realisiert. Hierbei kann ein Kondensator im eingeschalteten Zustand des Schutzschalters 1 geladen werden, welcher sich beim Trennen des mechanischen Schalters während eines Abschaltvorganges entlädt, und dadurch ein Abfallen des Spannungswertes 2 in der ersten Zweitdauer verursacht.

Die Abschaltkurve 8, also der vorgegebene zeitliche Verlauf des Spannungswertes 2 beim Abschaltvorgang, kann unterschiedliche vorgegebene Formen aufweisen, welche geeignet sind, das Auftreten von Kammerflimmern zu reduzieren.

Der Anfangszeitpunkt 9 kann insbesondere am Anfang des Abschaltvorganges angeordnet sein sein.

Weiters kann vorgesehen sein, dass bei einer Detektion eines Fehlerstromes der Abschaltvorgang verzögerungsfrei eingeleitet wird.

Gemäß einer nicht dargestellten Ausführungsform der Abschaltkurve 8 kann vorgesehen sein, dass die Abschaltkurve 8 lediglich wenigstens zwei Sprungstellen 14 des Spannungswertes 2 aufweist, wobei eine Sprungstelle 14 des Spannungswertes 2 am Anfangszeitpunkt 9 und eine weitere Sprungstelle 14 des Spannungswertes 2 am Endzeitpunkt 10 erfolgt. Eine Sprungstelle 14 des Spannungswertes 2 ist ein sprungartiger Abfall des Spannungswertes 2. Statt einem einzigen sprungartigen Spannungsabfall von der Betriebsspannung 7 auf im Wesentlichen Null wird der Spannungsabfall auf mehrere kleinere sprungartige und zeitlich voneinander beanstandete Spannungsabfälle aufgeteilt. Dadurch kann bereits die Wahrscheinlichkeit des Auftretens von Kammerflimmern verringert werden.

Weiters kann vorgesehen sein, dass die Abschaltkurve 8 monoton fallend, insbesondere streng monoton fallend, ist. Monoton fallend bedeutet, dass der Spannungswert 2 gemäß der Abschaltkurve 8 lediglich abfällt oder konstant bleibt. Streng monoton fallend bedeutet, dass der Spannungswert 2 gemäß der Abschaltkurve 8 lediglich abfällt bleibt.

Besonders bevorzugt kann vorgesehen sein, dass die Abschaltkurve 8 zumindest teilweise stetig ist. Die Abschaltkurve 8 kann daher insbesondere Zeitbereiche aufweisen, welche frei von Sprungstellen 14 sind. Durch die stetigen Bereiche der Abschaltkurve 8, in welchen der Spannungswert 2 kontinuierlich und nicht sprungartig abnimmt, kann die Gefahr des Auftretens von Kammerflimmern wesentlich reduziert werden.

Besonders bevorzugt kann vorgesehen sein, dass die Abschaltkurve 8 zumindest teilweise, insbesondere als Ganzes, stetig ist. Sofern die Abschaltkurve 8 als Ganzes stetig ist, ist die Abschaltkurve 8 komplett frei von Sprungstellen 14 des Spannungswertes 2.

Insbesondere kann vorgesehen sein, dass die Abschaltkurve 8 zumindest teilweise im Wesentlichen linear ist.

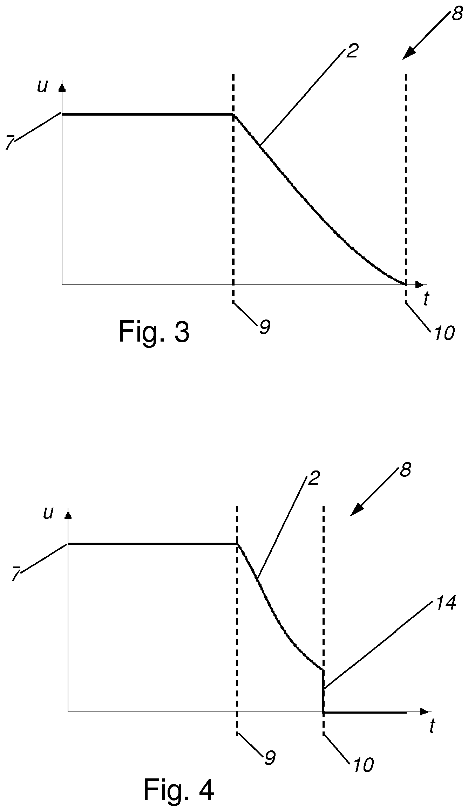

In Fig. 3 ist beispielhaft eine Abschaltkurve 8 dargestellt, welche als Ganzes stetig und im Wesentlichen linear ist.

Weiters kann vorgesehen sein, dass die Abschaltkurve 8 wenigstens einen stetigen Zeitbereich und wenigstens eine Sprungstelle 14 aufweist.

Weiters kann vorgesehen sein, dass die Abschaltkurve 8 vom Anfangszeitpunkt 9 bis zum Endzeitpunkt 10 stetig bis zu einem ersten Spannungswert 2 abfällt, und am Endzeitpunkt 10 eine Sprungstelle 14 vom ersten Spannungswert 2 auf im Wesentlichen Null aufweist. Durch die Sprungstelle 14 am Endzeitpunkt 10 ist der Spannungswert 2 bereits vor der Sprungstelle 14 auf einen niedrigen Wert abgesunken. Dadurch kann die erste Zeitdauer verkürzt werden, wobei die Wahrscheinlichkeit des Auftretens von Kammerflimmern weiterhin gering gehalten werden kann. Eine derartige Abschaltkurve 8 ist beispielhaft in Fig. 4 dargestellt.

Besonders bevorzugt kann vorgesehen sein, dass die Abschaltkurve 8 wenigstens eine Sprungstellen 14 aufweist, und dass sämtliche Sprungstellen 14 einen Abfall des Spannungswertes 2 von maximal 50%, insbesondere maximal 40%, besonders bevorzugt maximal 30%, des Betriebsspannungswertes 7 aufweisen. Die Abschaltkurve 8 enthält daher eine oder mehrere Sprungstellen 14, wobei sämtliche Sprungstellen kleiner sind als der Betriebsspannungswert 7 und einen Spannungsabfall von maximal 50%, insbesondere maximal 40%, besonders bevorzugt maximal 30%, des Betriebsspannungswertes 7 nicht überschreiten. Dadurch können große, sprungartige Abfälle des Spannungswertes 2 vermieden werden.

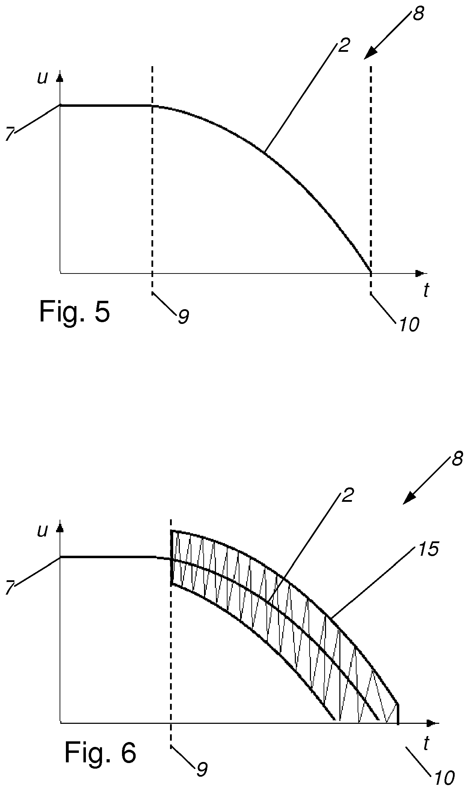

Weiters kann vorgesehen sein, dass die Abschaltkurve 8 im Wesentlichen konvex ist. Bei einer konvexen Form der Abschaltkurve 8 nimmt der Spannungsabfall mit der Zeit zu. Daher ist der Spannungsabfall noch gering, wenn der Spannungswert 2 nahe dem Betriebsspannungswert 7 ist, während die zeitliche Änderung des Spannungswertes 2 sich mit weiterem Abfall des Spannungswertes 2 vergrößert. Dadurch kann die Wahrscheinlichkeit eines Kammerflimmerns gering gehalten werden, da bei hohen Spannungswerten 2 die zeitliche Änderung des Spannungswertes 2 gering bleibt. Derartige Abschaltkurven 8 sind beispielhaft in Fig. 5 bis 7 dargestellt.

Weiters kann vorgesehen sein, dass der Abschaltkurve 8 ein Hochfrequenzsignal 15 überlagert wird. Als Hochfrequenzsignal 15 kann insbesondere ein Signal mit einer Frequenz zwischen 2kHz und 100kHz angesehen werden. Hierbei wird insbesondere der Halbleiterschalter 12 durch ein Signal der Steuereinheit 13 gesteuert, welcher eine Superposition der Abschaltkurve 8 und dem Hochfrequenzsignal 15 ist. Das Hochfrequenzsignal 15 hat den Vorteil, dass dieses zu schnell für eine Umpolung der Herzzellen ist, wodurch Signale mit ausreichend hoher Frequenz kein Kammerflimmern auslösen. Durch das Hochfrequenzsignal 15 kann das Herz weniger Empfindlich gegenüber dem Abschaltvorgang gemacht werden, wodurch die Wahrscheinlichkeit eines Kammerflimmerns verringert werden kann.

Insbesondere kann vorgesehen sein, dass das Hochfrequenzsignal 15 eine im Wesentlichen gleichbleibende Amplitude aufweist. Eine derartige Abschaltkurve 8 ist beispielhaft in Fig. 6 dargestellt.

Weiters kann vorgesehen sein, dass das Hochfrequenzsignal 15 als eine hochfrequente periodische Unterbrechung des Spannungswertes 2 ausgebildet ist. Eine derartige Abschaltkurve 8 ist beispielhaft in Fig. 7 dargestellt.

Zu beachten ist, dass in den Fig. 6 und 7 die Zeitverläufe der Abschaltkurve 8 und des Hochfrequenzsignals 15 sowie die Amplitude des Hochfrequenzsignals 15 zum teil stark verzerrt dargestellt sind, da der Verlauf des Hochfrequenzsignals 15 ansonsten nicht darstellbar wäre.

Bevorzugt kann weiters vorgesehen sein, dass vorgebbare erste Zeitdauer mindestens 10 ms, insbesondere mindestens 20 ms, besonders bevorzugt mindestens 50 ms, beträgt. Durch diese Werte der ersten Zeitdauer kann die Wahrscheinlichkeit verringert werden, dass der gesamte Spannungsabfall der Abschaltkurve 8 innerhalb der vulnerablen Phase erfolgt.

Weiters kann vorgesehen sein, dass vorgebbare erste Zeitdauer maximal 100 ms, insbesondere maximal 75 ms, besonders bevorzugt maximal 50 ms, beträgt.

## Patentansprüche

1. Verfahren zum Betreiben eines Schutzschalters (1), wobei bei einer Detektion eines, durch Körperschluss oder Erdschluss hervorgerufenen Fehlerstromes ein Abschaltvorgang eingeleitet wird, wobei beim Abschaltvorgang ein Spannungswert (2) zwischen einem Neutralleiter (3) und wenigstens einem stromführenden Leiter (4) an einem Ausgang (5) des Schutzschalters (1) durch eine Abschalteinheit (6) von einem Betriebsspannungswert (7) gemäß einer vorgegebenen Abschaltkurve (8) auf Null reduziert wird, **dadurch gekennzeichnet, dass**
beim Abschaltvorgang der Stromkreis nicht sprungartig unterbrochen wird, sondern der Spannungswert (2) gemäß der Abschaltkurve (8) ab einem Anfangszeitpunkt (9) in kontrollierter Form reduziert wird und erst nach einer vorgegebenen ersten Zeitdauer Null erreicht.

2. Verfahren nach Anspruch 1, **dadurch gekennzeichnet, dass** die Abschaltkurve (8) zumindest teilweise stetig ist.

3. Verfahren nach Anspruch 1 oder 2, **dadurch gekennzeichnet, dass** die Abschaltkurve (8) als Ganzes stetig ist.

4. Verfahren nach Anspruch 1 oder 2, **dadurch gekennzeichnet, dass** die Abschaltkurve (8) wenigstens eine Sprungstelle (14) aufweist, und dass sämtliche Sprungstellen (14) einen Abfall des Spannungswertes (2) von maximal 50%, insbesondere maximal 40%, besonders bevorzugt maximal 30%, des Betriebsspannungswertes (7) aufweisen.

5. Verfahren nach Anspruch 1 oder 4, **dadurch gekennzeichnet, dass** die Abschaltkurve (8) im Wesentlichen konvex ist.

6. Verfahren nach Anspruch 1 oder 5, **dadurch gekennzeichnet, dass** der Abschaltkurve (8) ein Hochfrequenzsignal (15) überlagert wird.

7. Verfahren nach einem der Ansprüche 1 bis 6, **dadurch gekennzeichnet, dass** die vorgebbare erste Zeitdauer mindestens 10 ms, insbesondere mindestens 20 ms, besonders bevorzugt mindestens 50 ms, beträgt.

8. Schutzschalter (1) umfassend einen Neutralleiter (3), wenigstens einen stromführenden Leiter (4) und eine Abschalteinheit (6), wobei die Abschalteinheit (6) ausgebildet ist bei einer Detektion eines, durch Körperschluss oder Erdschluss hervorgerufenen Fehlerstromes durch einen Fehlerstromdetektor (11) einen Abschaltvorgang durchzuführen, wobei
die Abschalteinheit (6) weiterhin ausgebildet ist bei einem Abschaltvorgang einen Spannungswert (2) zwischen dem Neutralleiter (3) und dem wenigstens einen stromführenden Leiter (4) an einem Ausgang (5) des Schutzschalters (1) gemäß einer vorgegebenen Abschaltkurve (8) von einem Betriebsspannungswert (7) auf Null zu reduzieren, **dadurch gekennzeichnet, dass**
beim Abschaltvorgang der Stromkreis nicht sprungartig unterbrochen wird, sondern der Spannungswert (2) gemäß der Abschaltkurve (8) ab einem Anfangszeitpunkt (9) in kontrollierter Form reduziert wird und erst nach einer vorgegebenen ersten Zeitdauer Null erreicht.

9. Schutzschalter (1) nach Anspruch 8, **dadurch gekennzeichnet, dass** die Abschalteinheit (6) wenigstens einen Halbleiterschalter (12) und eine mit dem wenigstens einen Halbleiterschalter (12) wirkverbundene Steuereinheit (13) aufweist, dass die Abschaltkurve (8) in der Steuereinheit (13) abgespeichert ist, und dass die Steuereinheit (13) ausgebildet ist einen Widerstand des wenigstens einen Halbleiterschalters (12) gemäß der Abschaltkurve (8) zu steuern.

## Claims

1. A method for operating a circuit breaker (1), a switch-off process being initiated when a fault current caused by body contact or ground contact is detected, during the switch-off process a voltage value (2) between a neutral conductor (3) and at least one live conductor (4) at an output (5) of the circuit breaker (1) being reduced from an operating voltage value (7) to zero by a switch-off unit (6) according to a predetermined switch-off curve (8),
**characterized in that** during the switch-off process, the circuit is not abruptly interrupted, but instead the voltage value (2) is reduced in a controlled manner according to the switch-off curve (8) from an initial time (9) and reaches zero only after a predetermined first period of time.

2. The method according to claim 1, **characterized in that** the switch-off curve (8) is at least partially continuous.

3. The method according to either claim 1 or claim 2, **characterized in that** the switch-off curve (8) as a whole is continuous.

4. The method according to either claim 1 or claim 2, **characterized in that** the switch-off curve (8) has at least one discontinuity (14), **and in that** all the discontinuities (14) have a drop in the voltage value (2) of a maximum of 50%, in particular a maximum of 40%, particularly preferably a maximum of 30%, of the operating voltage value (7).

5. The method according to either claim 1 or claim 4, **characterized in that** the switch-off curve (8) is substantially convex.

6. The method according to either claim 1 or claim 5, **characterized in that** the switch-off curve (8) is superimposed by a high-frequency signal (15).

7. The method according to any of claims 1 to 6, **characterized in that** the predeterminable first period of time is at least 10 ms, in particular at least 20 ms, particularly preferably at least 50 ms.

8. A circuit breaker (1) comprising a neutral conductor (3), at least one live conductor (4), and a switch-off unit (6), the switch-off unit (6) being configured to carry out a switch-off process when a fault current caused by body contact or ground contact is detected by a fault current detector (11), the switch-off unit (6) also being configured, during a switch-off process, to reduce a voltage value (2) between the neutral conductor (3) and the at least one live conductor (4) at an output (5) of the circuit breaker (1) from an operating voltage value (7) to zero according to a predetermined switch-off curve (8), **characterized in that** during the switch-off process, the circuit is not abruptly interrupted, but instead the voltage value (2) is reduced in a controlled manner according to the switch-off curve (8) from an initial time (9) and reaches zero only after a predetermined first period of time.

9. The circuit breaker (1) according to claim 8, **characterized in that** the switch-off unit (6) has at least one semiconductor switch (12) and a control unit (13) operatively connected to the at least one semiconductor switch (12), **in that** the switch-off curve (8) is stored in the control unit (13), **and in that** the control unit (13) is configured to control a resistance of the at least one semiconductor switch (12) according to the switch-off curve (8).

## Revendications

1. Procédé permettant de faire fonctionner un disjoncteur de protection (1), dans lequel un processus de coupure est déclenché par une détection d'un courant de fuite provoqué par un court-circuit à la masse ou un court-circuit à la terre, lors d'un processus de coupure, une valeur de tension (2) entre un conducteur neutre (3) et au moins un conducteur transporteur de courant (4) à une sortie (5) du disjoncteur de protection (1) étant réduite à zéro depuis une valeur de tension de fonctionnement (7) par une unité de coupure (6) conformément à une courbe de coupure (8) prédéterminée, **caractérisé en ce que,** lors du processus de coupure, le circuit n'est pas interrompu brusquement, mais la valeur de tension (2) est réduite suivant une forme contrôlée conformément à la courbe de coupure (8) à partir d'un instant initial (9) et n'atteint zéro qu'après une première période prédéterminée.

2. Procédé selon la revendication 1, **caractérisé en ce que** la courbe de coupure (8) est au moins partiellement continue.

3. Procédé selon la revendication 1 ou 2, **caractérisé en ce que** la courbe de coupure (8) est continue dans son ensemble.

4. Procédé selon la revendication 1 ou 2, **caractérisé en ce que** la courbe de coupure (8) présente au moins un point de discontinuité (14), **et en ce que** tous les points de discontinuité (14) présentent une chute de la valeur de tension (2) d'au plus 50 %, en particulier d'au plus 40 %, de manière particulièrement préférée d'au plus 30 %, de la valeur de tension de fonctionnement (7).

5. Procédé selon la revendication 1 ou 4, **caractérisé en ce que** la courbe de coupure (8) est sensiblement convexe.

6. Procédé selon la revendication 1 ou 5, **caractérisé en ce qu'un** signal haute fréquence (15) est superposé à la courbe de coupure (8).

7. Procédé selon l'une des revendications 1 à 6, **caractérisé en ce que** la première période pouvant être prédéterminée est d'au moins 10 ms, en particulier d'au moins 20 ms, de manière particulièrement préférée d'au moins 50 ms.

8. Disjoncteur de protection (1) comprenant un conducteur neutre (3), au moins un conducteur transporteur de courant (4) et une unité de coupure (6), dans lequel l'unité de coupure (6) est configurée pour réaliser un processus de coupure lors d'une détection d'un courant de fuite provoqué par un court-circuit à la masse ou un court-circuit à la terre au moyen d'un détecteur de courant de fuite (11), l'unité de coupure (6) étant en outre configurée pour, lors d'un processus de coupure, réduire à zéro une valeur de tension (2) entre le conducteur neutre (3) et l'au moins un conducteur transporteur de courant (4) à une sortie (5) du disjoncteur de protection (1) depuis une valeur de tension de fonctionnement (7) conformément à une courbe de coupure (8) prédéterminée, **caractérisé en ce que,** lors du processus de coupure, le circuit n'est pas interrompu brusquement, mais la valeur de tension (2) est réduite suivant une forme contrôlée conformément à la courbe de coupure (8) à partir d'un instant initial (9) et n'atteint zéro qu'après une première période prédéterminée.

9. Disjoncteur de protection (1) selon la revendication 8, **caractérisé en ce que** l'unité de coupure (6) présente au moins un commutateur à semi-conducteurs (12) et une unité de commande (13) connectée de manière fonctionnelle à l'au moins un commutateur à semi-conducteurs (12), **en ce que** la courbe de coupure (8) est enregistrée dans l'unité de commande (13), **et en ce que** l'unité de commande (13) est configurée pour commander une résistance de l'au moins un commutateur à semi-conducteurs (12) conformément à la courbe de coupure (8).
